# FASCICULE DE BREVET EUROPEEN

(11) **EP 3 613 956 B1**
(45) Date de publication et mention de la délivrance du brevet: **24.04.2024**
(21) Numéro de dépôt: 19192861.3
(22) Date de dépôt: 21.08.2019
(51) Int. Cl.: F01D 25/24, B64D 29/00, F02C 7/25, F02C 7/28

(54) **DISPOSITIF ANTI-FEU DE FERMETURE D'ESPACES AU NIVEAU DE JOINTURES D'UNE NACELLE ET NACELLE COMPRENANT UN TEL DISPOSITIF**
BRANDSCHUTZVORRICHTUNG ZUM VERSCHLIESSEN VON RÄUMEN AN DEN GELENKEN EINER GONDEL, UND GONDEL, DIE EINE SOLCHE VORRICHTUNG UMFASST
FIREPROOF DEVICE FOR CLOSING SPACES AT THE JOINTS OF A NACELLE AND NACELLE COMPRISING SUCH A DEVICE

(30) Priorité: 22.08.2018 FR 1857584
(43) Date de publication de la demande: 26.02.2020
(73) Titulaire: Safran Nacelles, 76700 Gonfreville-l'Orcher (FR)
(72) Inventeur: LE DOCTE, Thierry, 77550 MOISSY CRAMAYEL (FR)
(74) Mandataire: Germain Maureau

(56) Documents cités:
- FR-A1- 2 973 467
- US-A1- 2018 156 129
- US-A1- 2018 156 130

## Description

La présente invention concerne un dispositif destiné à obturer des espaces présents au niveau de jointures entre des éléments d'une nacelle de turboréacteur pour un aéronef.

L'invention s'applique à des espaces soumis à toute valeur de pression, et notamment des espaces soumis à une pression d'au moins 35 mbar.

La présente invention concerne en outre une nacelle équipée d'un tel dispositif.

Un aéronef est mû par au moins un ensemble propulsif comportant un turboréacteur logé dans une nacelle abritant également un ensemble de dispositifs annexes liés à son fonctionnement, tels que des boites de transmission de puissance ou des turbines, et assurant diverses fonctions, lorsque le turboréacteur est en fonctionnement ou à l'arrêt.

Une nacelle présente généralement une structure tubulaire comprenant une entrée d'air en avant du turboréacteur, une section médiane destinée à entourer une soufflante du turboréacteur, une section arrière destinée à entourer la chambre de combustion du turboréacteur et pouvant abriter des moyens d'inversion de poussée.

Les nacelles modernes sont souvent destinées à abriter un turboréacteur double flux apte à générer, par l'intermédiaire des pâles de la soufflante en rotation et d'un compresseur, un flux d'air chaud, dit primaire, issu de la chambre de combustion du turboréacteur et des turbines haute pression / basse pression disposées en aval de la chambre de compression. L'ensemble compresseur, chambre de combustion et turbines constitue le générateur de gaz du turboréacteur, aussi appelé coeur du turboréacteur (ou core).

Une nacelle comprend généralement une structure externe comprenant l'entrée d'air, la section médiane et la section arrière, et une structure interne concentrique de la section arrière, dite Inner Fixed Structure (IFS) entourant le coeur du turboréacteur en arrière de la soufflante. Ces structures externe et interne définissent un canal annulaire d'écoulement, encore appelé veine secondaire, visant à canaliser un flux d'air froid, dit secondaire, qui circule à l'extérieur du turboréacteur.

La section médiane de la nacelle peut également être appelée capot de carter de soufflante, tandis que la section arrière peut également être appelée inverseur de poussée, ou capot coulissant s'il est apte à coulisser longitudinalement.

La structure arrière du coeur du turboréacteur est terminée par une tuyère dite primaire assurant l'éjection du flux primaire d'air chaud. La structure externe de la nacelle est, quant à elle, généralement terminée par une tuyère dite secondaire pouvant être à section variable et optimisant l'éjection du flux secondaire d'air froid.

La structure interne de la nacelle constitue ainsi un capotage autour du coeur du turboréacteur et peut être désigné sous différents noms, notamment capot coeur arrière (Aft Core Cowl, ACC).

Les dispositifs annexes, tels que les boites de transmission de puissance ou les turbines, peuvent provoquer des incendies. Ils sont logés dans des volumes de la nacelle alors appelés « zones feu ». Ainsi, les parois de ces zones feu doivent résister à un incendie et être étanches. Ces parois peuvent être réalisées en plusieurs éléments joints.

Des espaces sont généralement présents au niveau des jointures entre ces différents éléments. Ils permettent d'assurer le jeu nécessaire à l'assemblage des dispositifs annexes dans la nacelle.

Il est nécessaire de combler ces espaces, après assemblage, afin de réaliser une barrière anti-feu.

Habituellement, ces espaces sont obturés par application de mastic résistant au feu.

Le mastic est une pâte plastique obtenue en mélangeant différentes substances synthétiques ou naturelles, de sorte à lui conférer les propriétés mécaniques souhaitées. Le mastic généralement utilisé pour réaliser une barrière anti-feu au niveau de jointures entre des éléments d'une nacelle est composé de plusieurs polymères se vulcanisant en présence d'air humide.

Cette pâte est appliquée au niveau des jointures, puis elle polymérise de façon à obturer les espaces et réaliser une barrière étanche aux fluides et aux flammes.

Le mastic est adapté pour combler des espaces soumis à toute valeur de pression, et notamment des espaces soumis à des pressions supérieures à 35 mbar.

Bien que le mastic ne soit pas inflammable au contact du feu, il se dilate et se liquéfie au contact de la chaleur, et migre en dehors de la zone feu. Du gaz, produit par la dégradation du mastic, est alors émis en dehors de la zone feu où il peut s'enflammer au contact de l'air et des parois chauffées par les flammes.

Une autre solution connue pour réaliser des barrières anti-feu au niveau de jointures d'éléments de nacelle est présentée dans le document FR 2 973 439. Cette solution consiste à appliquer un ensemble de joint d'étanchéité comprenant une première extrémité équipée de moyens de fixation sur au moins un premier élément, une deuxième extrémité conçue pour venir en contact contre une zone d'appui d'une deuxième structure, et une pluralité de lamelles, métalliques ou en matériau composite, adjacentes agencées entre les première et deuxième extrémités, présentant une structure en accordéon de sorte qu'il soit déformable.

Ce type d'ensemble de joint d'étanchéité présente une structure complexe et engendre donc des coûts de fabrication élevés.

En outre, ce type de joint présente une structure déformable nécessaire au niveau de la jointure entre certains éléments ayant des déplacements relatifs, mais sans objet au niveau de la jointure entre des éléments n'ayant pas de déplacements relatifs.

Une autre solution présentée dans le document FR 2 973 467, consiste à disposer un dispositif d'étanchéité entre deux structures d'une nacelle, le dispositif d'étanchéité comportant une extrémité libre pour pallier à toute variation de hauteur entre les deux structures. US 2018/156130 A1 divulgue une autre solution de l'art antérieur.

Pour combler les espaces au niveau de jointures entre des éléments ne présentant pas ou peu de déplacement relatifs, il est nécessaire de fournir un nouveau type de joint dont la structure est simplifiée de sorte à limiter les coûts de fabrication, et qui permette de réaliser une barrière anti-feu améliorée, en évitant ou limitant l'application de mastic.

A cet effet, l'invention a pour objet un dispositif pour obturer un espace au niveau d'une jointure entre des éléments d'une nacelle, caractérisé en ce qu'il est non inflammable à la chaleur, et en ce qu'il présente une forme prédéterminée.

Ainsi, le dispositif selon l'invention permet d'améliorer les barrières anti-feu au niveau de jointures entre des éléments constituant une paroi anti-feu d'une nacelle.

On entend par « espace », une zone ou différentes pièces, ou éléments de la nacelle, se rejoignent en laissant un jour entre elles. L'espace peut être de forme complexe.

Selon d'autres caractéristiques de l'invention, le dispositif de l'invention comporte l'une ou plusieurs des caractéristiques optionnelles suivantes considérées seules ou selon toutes les combinaisons possibles.

Le dispositif est avantageusement étanche sous une pression supérieure à 35 mbar.

Dans un mode de réalisation, le dispositif est adapté pour obturer un espace par recouvrement dudit espace.

Dans un autre mode de réalisation, le dispositif est adapté pour obturer un espace par son insertion au moins partielle dans ledit espace.

Selon une caractéristique de ce mode de réalisation, le dispositif présente avantageusement une extrémité proximale destinée à être insérée dans l'espace à obturer de sorte à l'obturer, et une extrémité distale destinée à être fixée à un élément de la nacelle du côté où le feu est susceptible de se déclencher.

Ainsi, l'extrémité proximale ayant une forme prédéterminée permet d'épouser la forme éventuellement complexe de l'espace. L'extrémité distale, dégagée de l'espace, permet de fixer le dispositif sur un élément de la nacelle, dans une zone où le feu serait susceptible de partir.

De préférence, le dispositif présente la forme d'une plaque sensiblement plane.

Selon une caractéristique, le dispositif présente une pointe à son extrémité proximale destinée à être insérée dans un espace à obturer.

Selon une caractéristique, la pointe est tronquée de sorte que le dispositif présente une forme sensiblement trapézoïdale.

Le dispositif est destiné à être fixé sur un élément de la nacelle par rivetage ou collage.

Le dispositif présente avantageusement une épaisseur croissante depuis l'extrémité proximale vers l'extrémité distale, allant de préférence de 0,1 à 2 mm, et de préférence encore de 0,4 à 1,6 mm.

Ainsi, le dispositif est destiné à être introduit dans un espace jusqu'à ce que son contour soit en contact avec les parois dudit espace afin de l'obturer.

De cette façon, un même dispositif est apte à combler des espaces de différentes épaisseurs et largeurs.

Le dispositif selon l'invention est de préférence réalisé en métal tel que le titane ou l'inox, ou en matériau composite fibreux, ou en élastomère, tel que le silicone selon la norme NFL 17 153.

L'invention concerne en outre une nacelle comportant un dispositif tel que décrit précédemment.

Plus particulièrement, l'invention concerne une nacelle comportant un dispositif tel que décrit précédemment et un élément non inflammable au contact du feu au niveau de ses contours, tel que du mastic.

D'autres caractéristiques et avantages de la présente invention apparaîtront à la lecture de la description qui va suivre et à l'examen des figures annexées dans lesquelles :
- la figure 1 est une vue schématique en perspective d'une nacelle de turboréacteur d'un aéronef ;
- la figure 2 est une vue schématique en coupe selon le plan P de la nacelle de la figure 1, comportant deux variantes du dispositif selon l'invention, chaque dispostif obturant un espace au niveau d'une jointure entre des éléments de la nacelle ;
- la figure 3 est une vue de détail illustrant la zone A de la figure 2 ;
- les figures 4a et 4b sont des vues schématiques en perspective de face du dispositif de la zone A de la figure 2, selon deux variantes ;
- la figure 5 est une vue de détail illustrant la zone B de la figure 2 ;
- la figure 6 est une vue schématique en perspective de face du dispositif de la zone B de la figure 2 ;
- La figure 7a est une vue schématique illustrant une variante dans laquelle le dispositif de la figure 4a comporte un élément non inflammable au contact du feu au niveau de son contour ;
- La figure 7b est une vue schématique illustrant une variante du dispositif selon l'invention, le dispostif recouvrant un espace au niveau d'une jointure entre des éléments d'une nacelle.
- Les figures 8a et 8b illustrent des variantes de dispositif selon l'invention dans des espaces au niveau de jointures entre des éléments d'une nacelle.

Dans la description qui va suivre et dans les revendications, des composants identiques, similaires ou analogues seront désignés par les mêmes chiffres de référence et on emploiera les termes « avant », « arrière », « horizontal », « vertical », « supérieur », « inférieur », etc. à titre non limitatif et en référence aux dessins afin de faciliter la description.

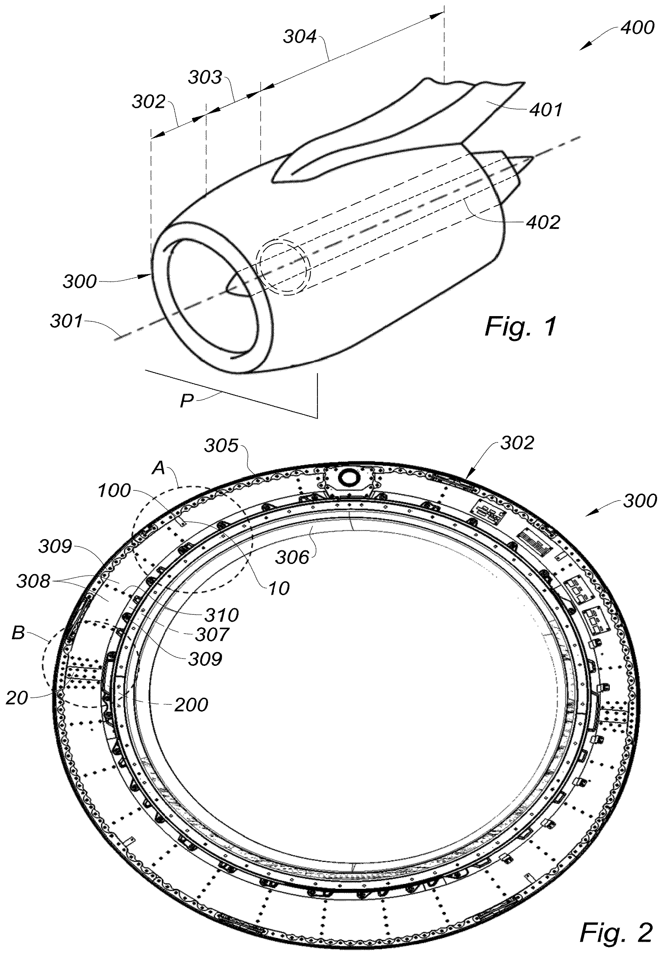

La figure 1 représente un ensemble propulsif 400 d'un aéronef destiné à être relié à une voilure par l'intermédiaire d'un mât 401.

L'ensemble propulsif 400 comprend un turboréacteur 402 disposé de manière sensiblement concentrique dans une nacelle 300 qui permet notamment de canaliser un flux d'air en direction du turboréacteur.

Pour la suite de la description, la direction longitudinale est parallèle à l'axe longitudinal 301 de la nacelle 300. Un plan longitudinal est un plan passant par l'axe longitudinal 301 de la nacelle 300 et un plan transversal est un plan perpendiculaire à la direction longitudinale.

Les termes « avant » et « arrière » font référence au sens d'écoulement du flux d'air dans la nacelle 300. L'avant correspond à une zone où le flux d'air entre dans la nacelle et l'arrière à une zone où le flux d'air sort.

La nacelle 300 comporte d'avant en arrière une entrée d'air 302, une section médiane 303 destinée à entourer une soufflante (non représentée) du turboréacteur 402, et une section arrière 304 destinée à entourer la chambre de combustion du turboréacteur 402 et pouvant abriter des moyens d'inversion de poussée (non représentés).

La figure 2 représente une coupe de l'entrée d'air 302 de la nacelle 300, ladite entrée d'air 302 comportant un capot externe 305 et un capot interne 306, ledit capot interne 306 comportant un panneau acoustique 307.

Des dispositifs annexes (non représentés) sont destinés à être disposés dans des volumes de l'entrée d'air situés entre le capot externe 305 et le capot interne 306.

Ces volumes sont fermés par des parois étanchent comportant des tôles feu 308 reliées entre elles par des rivets 310, et reliées au capot externe 305 et au panneau acoustique 307 par des cornières 309.

Un premier espace 100 est présent au niveau d'une jointure entre les différent élément des parois, plus précisément entre des cornières 309 et des tôles feu 308, au niveau du capôt externe 305.

Ce premier espace 100 est obturé par un dispositif 10 pour obturer un espace selon un premier mode de réalisation de l'invention.

Un deuxième espace 200 est présent au niveau d'une jointure entre les différent élément des parois, plus précisément entre des cornières 309 reliant des tôles feu 308 au panneau acoustique 307.

Ce deuxième espace 200 est obturé par un dispositif 20 pour obturer un espace selon un deuxième mode de réalisation de l'invention.

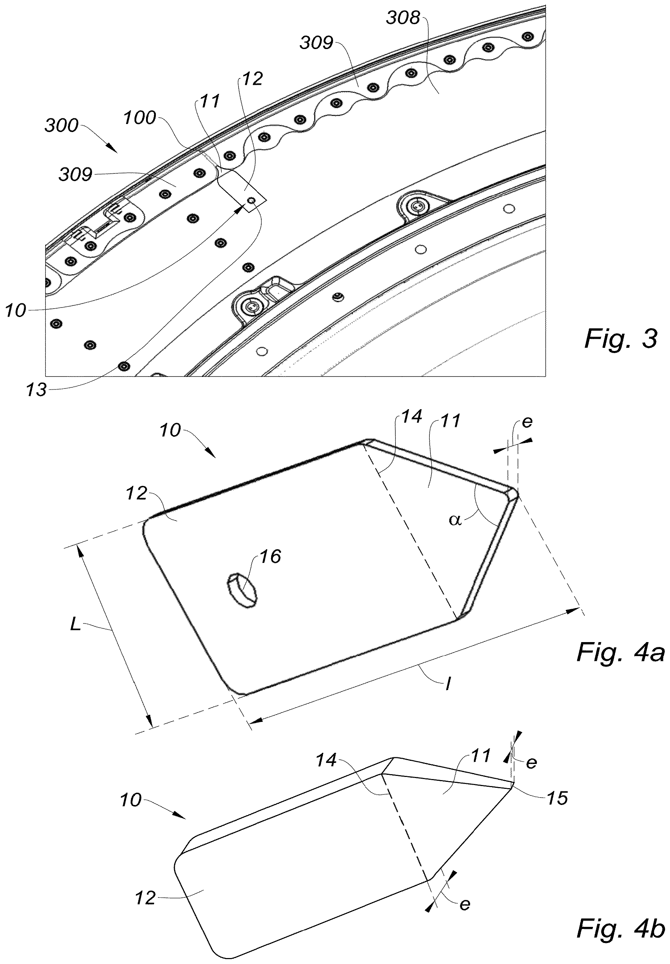

La figure 3 illustre plus en détail la zone A de la figure 2, comportant le premier espace 100 obturé par le dispsitif 10 selon un premier mode de réalisation.

Le dispositif 10 présente une extrémité proximale 11 insérée dans l'espace 100, et une extrémité distale 12 fixée à la tôle feu 308 par rivets 13.

Le dispositif 10 est réalisée en métal, tel que le titane ou l'inox.

En variante, le dispositif 10 est réalisé en matériau composite tel que du carbone époxy.

Ainsi, le dispositif 10 est non inflammable à la chaleur, et étanche même à des pressions supérieures à 35 mbar.

La figure 4a illustre une première variante du dispositif 10 selon le premier mode de réalisation.

Le dispositif 10 présente la forme d'une plaque sensiblement plane de largeur L comprise entre 10 et 20 mm, de préférence entre 15 et 20 mm et de préférence encore de l'ordre de 17 mm ; de longueur « I » comprise entre 30 et 60 mm, de préférence entre 40 et 50 mm et de préférence encore de l'ordre de 46 mm ; d'épaisseur « e » de l'ordre de 1 mm.

L'extrémité proximale 11 de la plaque formant le dispositif 10 présente la forme d'une pointe triangulaire présentant une base 14 représentée en pointillés sur la figure 4a, et un sommet 15 d'angle α de l'ordre de 60°.

La figure 4b illustre une deuxième variante du dispositif 10 selon le premier mode de réalisation.

Dans cette deuxième variante, le dispositif 10 présente une épaisseur « e » croissante depuis le sommet 15, vers la base 14 de l'extrémité proximale 11 en forme de pointe triangulaire.

L'épaisseur « e » va de préférence de 0,1 à 2 mm, et de préférence encore de 0,4 à 1,6 mm.

Cette épaisseur variable permet de combler des espaces dont la largeur est variable.

Dans des variantes non représentées, l'angle α peut être de l'ordre de 20° ou encore de 45°.

Dans d'autres variantes non représentée, la pointe est tronquée de sorte que l'extrémité proximale 11 présente la forme d'un trapèze.

L'extrémité distale 12 présente la forme d'une pièce rectangulaire sensibmement plane, dont la largeur L correspond à la base 14 de la pointe formant l'extrémité proximale 11.

La pièce rectangulaire formant l'extrémité distale 12 est coplanaire à la pointe triangulaire formant l'extrémité proximale 11.

Le dispositif 10 comporte au niveau de son extrémité distale 12 un orifice 16 permettant sa fixation par rivetage.

Dans une variante non représentée, le dispositif 10 comporte plusieurs orifices 14 permettant sa fixation par rivetage.

Le dispositif 10 est monobloc.

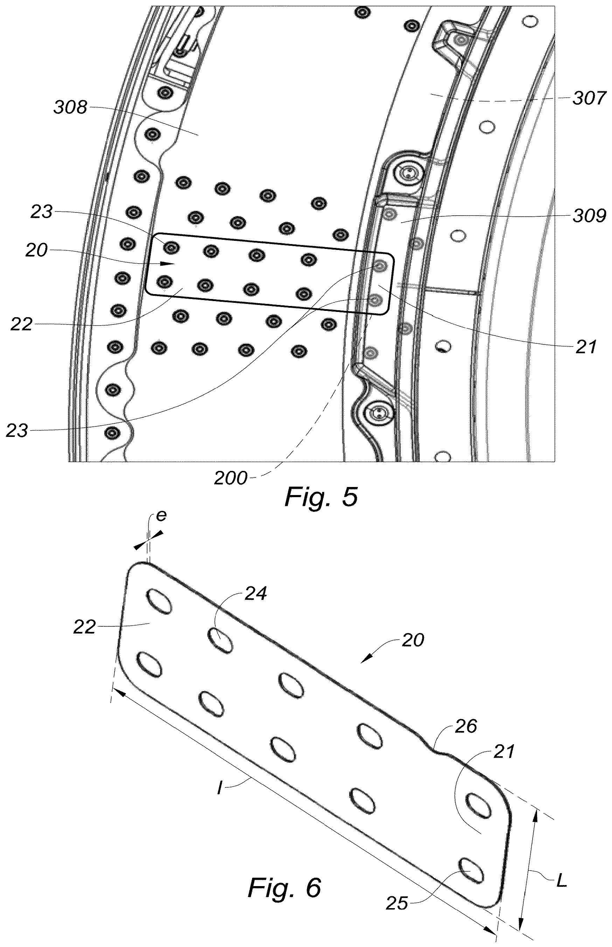

La figure 5 illustre plus en détail la zone B de la figure 2, comportant le deuxième espace 200 obturé par le dispositif 20 selon un deuxième mode de réalisation.

Le dispositif 20 présente une extrémité proximale 21 insérée dans l'espace 200, et une extrémité distale 22 fixée aux tôle feu 308 par rivets 23.

L'extrémité proximale 21 est également fixée aux tôles feu 308 et aux cornières 309 reliant les tôles feu 308 au panneau acoustique 307, par rivets 23.

Le dispositif 20 est réalisée en métal, tel que le titane ou l'inox.

En variante, le dispositif 20 est réalisé en matériau composite tel que le carbone époxy.

Ainsi, le dispositif 20 est non inflammable à la chaleur, et étanche même à des pressions supérieures à 35 mbar.

La figure 6 illustre le dispositif 20 selon le deuxième mode de réalisation.

Le dispositif 20 présente la forme d'une plaque sensiblement plane et rectangulaire de largeur L comprise entre 30 et 60 mm, de préférence entre 40 et 50 mm et de préférence encore de l'ordre de 43 mm ; de longueur « l » comprise entre 100 et 160 mm, de préférence entre 130 et 140 mm et de préférence encore de l'ordre de 134 mm ; d'épaisseur « e » de l'ordre de 0,5 mm.

Le dispositif 20 comporte au niveau de son extrémité distale 22 des orifices oblongs 24 permettant un bon positionnement et sa fixation par rivetage.

Il comporte en outre au niveau de son extrémité proximale 21 des trous 25 permettant de laisser passer les rivets 23 (figure 5) permettant de fixer la tôle feu 308 au panneau acoustique 307.

Par ailleurs, le dispositif 20 comporte un détourage 26 permettant de laisser passer un rivet 310 (figure 2) permetant de fixer des tôles feu 308 entre elles.

Le dispositif 20 est monobloc.

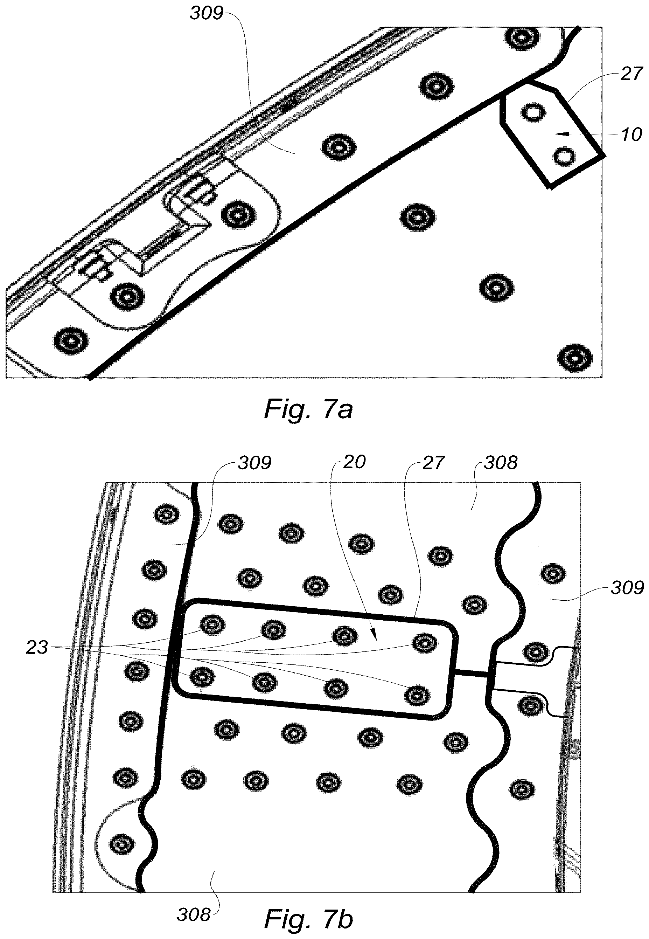

Dans la variante représentée à la figure 7a, le dispositif 10 est en élastomère, tel que le silicone selon la norme NFL 17 153.

Selon cette variante, il comporte, de préférence lorsque la pression est supérieure à 35 mbar, un élément 27 non inflammable au contact du feu, tel que du mastic, au niveau de ses contours.

En effet, le silicone étant inflammable au contact du feu, il est avantageux de le protéger du feu par un matériau non inflammable au contact du feu tel que le mastic.

L'élément 27 non inflammable au contact du feu est également appliqué au niveau des cornières 309.

L'élément 27 non inflammable au contact du feu est appliqué dans des quantités inférieures aux quantités appliquées dans l'art antérieur.

En effet, l'épaisseur du mastic est de l'ordre de 0,4 à 1 mm.

La figure 7b ilustre un espace (non représenté) présent au niveau d'une jointure entre les différent élément des parois, plus précisément entre des tôles feu 308.

Cet espace est obturé par le dispositif 20 tel que décrit au regard de la figure 6, ledit dispositif recouvrant l'orifice (non représenté) de sorte à l'obturer.

Le dispositif 20 est fixé aux tôles feu 308 par rivets 23.

Dans l'exemple illustré à la figure 7b, le dispositif 20 est en élastomère, tel que le silicone selon la norme NFL 17 153 et comporte, de préférence lorsque la pression est supérieure à 35 mbar, un élément 27 non inflammable au contact du feu, tel que du mastic, au niveau de ses contours.

L'élément 27 non inflammable au contact du feu est également appliqué au niveau des cornières 309.

L'élément 27 non inflammable au contact du feu est appliqué dans des quantités inférieures aux quantités appliquées dans l'art antérieur.

En effet, l'épaisseur du mastic est de l'ordre de 0,4 à 1 mm.

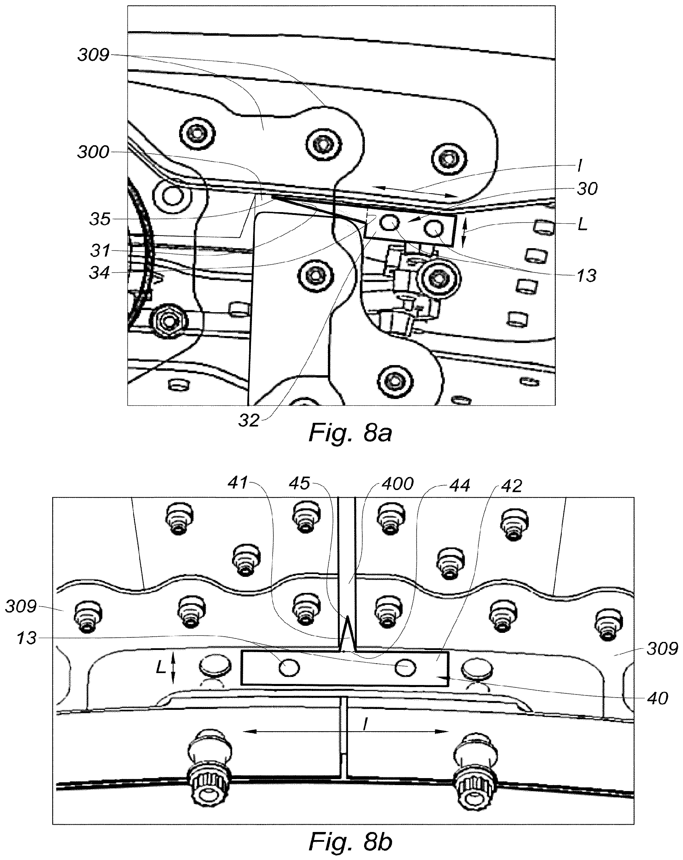

La figure 8a illustre un dispositif 30 selon un troisième mode de réalisation de l'invention inséré dans un espace 300 au niveau de jointures entre des cornières 309 permettant de relier des éléments d'une nacelle.

Le dispositif 30 selon ce troisième mode de réalisation présente une extrémité proximale 31 insérée dans l'espace 300, et une extrémité distale 32 fixée par rivets 13 à des éléments de la nacelle.

Le dispositif 30 est réalisée en métal, tel que le titane ou l'inox.

En variante, le dispositif 30 est réalisé en matériau composite tel que du carbone époxy.

Ainsi, le dispositif 30 est non inflammable à la chaleur, et étanche même à des pressions supérieures à 35 mbar.

L'extrémité proximale 31 sous forme de pointe est dans le prolongement de la longueur « I » du dispositif 30, proche d'un bord.

La figure 8b illustre un dispositif 40 selon un quatrième mode de réalisation de l'invention inséré dans un espace 400 au niveau de jointures entre des cornières 309 permettant de relier des éléments d'une nacelle.

Le dispositif 40 selon ce quatrième mode de réalisation présente une extrémité proximale 41 insérée dans l'espace 400, et une extrémité distale 42 fixée à des cornières 309 par rivets 13.

Le dispositif 40 est réalisée en métal, tel que le titane ou l'inox.

En variante, le dispositif 40 est réalisé en matériau composite tel que du carbone époxy.

Ainsi, le dispositif 40 est non inflammable à la chaleur, et étanche même à des pressions supérieures à 35 mbar.

L'extrémité proximale 41 sous forme de pointe est dans le prolongement de la largeur L du dispositif 40, sensiblement au centre de la largeur L.

## Revendications

1. Dispositif (10, 20) pour obturer un espace (100, 200) au niveau d'une jointure entre des éléments (305, 306, 307, 308, 309) d'une nacelle, **caractérisé en ce qu'**il est non inflammable à la chaleur, **en ce qu'**il présente une forme prédéterminée, et **en ce qu'**il présente une extrémité proximale (11, 21) destinée à être insérée dans l'espace (100, 200) à obturer de sorte à l'obturer, et une extrémité distale (12, 22) destinée à être fixée à un élément de la nacelle (305, 306, 307, 308, 309) du côté où le feu est susceptible de se déclencher.

2. Dispositif selon la revendication 1, présentant la forme d'une plaque sensiblement plane.

3. Dispositif selon l'une quelconque des revendications précédentes, présentant une pointe à son extrémité proximale (11) destinée à être insérée dans un espace (100) à obturer.

4. Dispositif selon la revendication précédente, dans lequel la pointe est tronquée de sorte que le dispositif (10) présente une forme sensiblement trapézoïdale.

5. Dispositif selon l'une quelconque des revendications précédentes, destiné à être fixé sur un élément de la nacelle par rivetage ou collage.

6. Dispositif selon l'une quelconque des revendications précédentes, présentant une épaisseur (e) croissante depuis l'extrémité proximale (11, 21) vers l'extrémité distale (12, 22), allant de préférence de 0,1 à 2 mm, et de préférence encore de 0,4 à 1,6 mm.

7. Dispositif selon l'une quelconque des revendications précédentes, réalisé en métal tel que le titane ou l'inox, ou en matériau composite fibreux.

8. Dispositif selon l'une quelconque des revendications 1 à 6, réalisé en élastomère.

9. Nacelle comportant un dispositif selon l'une quelconque des revendications 1 à 7.

10. Nacelle comportant un dispositif selon la revendication 8 et un élément non inflammable au contact du feu au niveau de ses contours, tel que du mastic.

## Patentansprüche

1. Vorrichtung (10, 20) zum Abdichten eines Raums (100, 200) an einer Verbindungsstelle zwischen Elementen (305, 306, 307, 308, 309) einer Gondel, **dadurch gekennzeichnet, dass** sie bei Hitze nicht entflammbar ist, dass sie eine vorbestimmte Form aufweist und dass sie ein proximales Ende (11, 21), das dazu bestimmt ist, in den abzudichtenden Raum (100, 200) eingeführt zu werden, um ihn abzudichten, und ein distales Ende (12, 22) aufweist, das dazu bestimmt ist, an ein Element der Gondel (305, 306, 307, 308, 309) auf der Seite befestigt zu werden, auf der das Feuer wahrscheinlich ausbrechen könnte.

2. Vorrichtung nach Anspruch 1, die die Form einer im Wesentlichen ebenen Platte aufweist.

3. Vorrichtung nach einem der vorhergehenden Ansprüche, die an ihrem proximalen Ende (11) eine Spitze aufweist, die dazu bestimmt ist, in einen abzudichtenden Raum (100) eingeführt zu werden.

4. Vorrichtung nach dem vorhergehenden Anspruch, wobei die Spitze derart abgestumpft ist, dass die Vorrichtung (10) eine im Wesentlichen trapezförmige Form aufweist.

5. Vorrichtung nach einem der vorhergehenden Ansprüche, die dazu bestimmt ist, an einem Element der Gondel durch Nieten oder Kleben befestigt zu werden.

6. Vorrichtung nach einem der vorhergehenden Ansprüche, die eine Dicke (e) aufweist, die vom proximalen Ende (11, 21) zum distalen Ende (12, 22) hin zunimmt, vorzugsweise im Bereich von 0,1 bis 2 mm und noch bevorzugter von 0,4 bis 1,6 mm.

7. Vorrichtung nach einem der vorhergehenden Ansprüche, die aus einem Metall wie Titan oder Edelstahl oder einem Faserverbundwerkstoff hergestellt ist.

8. Vorrichtung nach einem der vorhergehenden Ansprüche 1 bis 6, die aus einem Elastomer hergestellt ist.

9. Gondel, die eine Vorrichtung nach einem der vorhergehenden Ansprüche 1 bis 7 umfasst.

10. Gondel, die eine Vorrichtung nach Anspruch 8 und ein Element umfasst, das bei Kontakt mit Feuer an seinen Konturen nicht brennbar ist, wie etwa Mastix.

## Claims

1. A device (10, 20) for sealing a space (100, 200) at the level of a juncture between elements (305, 306, 307, 308, 309) of a nacelle, **characterized in that** it is non-flammable by heat, **in that** it has a predetermined shape and **in that** it has a proximal end (11, 21) intended to be inserted into the space (100, 200) to be sealed so as to seal it, and a distal end (12, 22) intended to be fastened to an element of the nacelle (305, 306, 307, 308, 309) on the side where the fire is likely to start.

2. The device according to claim 1, having the shape of a substantially planar plate.

3. The device according to any one of the preceding claims, having a tip at its proximal end (11) intended to be inserted into a space (100) to be sealed.

4. The device according to the preceding claim, wherein the tip is truncated so that the device (10) has a substantially trapezoidal shape.

5. The device according to any one of the preceding claims, intended to be fastened on an element of the nacelle by riveting or gluing.

6. The device according to any one of the preceding claims, having a thickness (e) increasing from the proximal end (11, 21) to the distal end (12, 22), ranging preferably from 0.1 to 2 mm, and more preferably from 0.4 to 1.6 mm.

7. The device according to any one of the preceding claims, made of metal such as titanium or stainless steel, or of a fibrous composite material.

8. The device according to any one of claims 1 to 6, made of an elastomer.

9. A nacelle including a device according to any one of claims 1 to 7.

10. The nacelle including a device according to claim 8 and a non-flammable element when in contact with fire at the level of the contours thereof, such as mastic.
